# EUROPEAN PATENT APPLICATION

(11) **EP 1 217 548 A2**
(43) Date of publication of application: **26.06.2002**
(21) Application number: 01130294.0
(22) Date of filing: 21.12.2001
(51) Int. Cl.: G06F 17/30

(54) **Server framework for database server**

(30) Priority: 22.12.2000 US 747426
(71) Applicant: SUN MICROSYSTEMS, INC., Palo Alto, California 94303 (US)
(72) Inventor: Raghunathan, Balaji, Cupertino, California 95014 (US); Vaidya, Neelam N., Cupertino, California 95014 (US)
(74) Representative: HOFFMANN - EITLE

(57) **Abstract**

Described herein is a framework for a server where data is accessed from a database server. In one embodiment, the database server stores data in a hierarchical manner, for instance using a DOM tree. In one embodiment of the present invention, one or more clients requests are made to a server for data stored using a DOM. The requests are separated into smaller units. Each smaller unit is then serviced in the order it is received. Thus, each client gets a more balanced distribution of services to its requests (i.e., one request is not completely fulfilled while others wait and remain unfulfilled).

## Description

### BACKGROUND OF THE INVENTION

### FIELD OF THE INVENTION

The present invention relates primarily to the field of servers, and in particular to a server framework that handles client requests to a database server by equitably distributing resources to the client requests.

Portions of the disclosure of this patent document contains material that is subject to copyright protection. The copyright owner has no objection to the facsimile reproduction by anyone of the patent document or the patent disclosure as it appears in the Patent and Trademark Office file or records, but otherwise reserves all rights whatsoever.

### BACKGROUND ART

In modern computing environments, data is typically accessed over a computer network by an end user who requests the data from one or more intermediate "server" computers who in turn fulfill the requests by accessing a "database" server. The database server has a database where all the data is organized and stored.

One way that the data is stored and accessed is hierarchically, for instance using a Document Object Model (DOM) to arrange the data. The manner in which users have been permitted to access the data from database servers, in particular when it is organized hierarchically, has in the past been inefficient, unfair, and does not effectively utilize the resources of the system.

Before further discussing the drawbacks associated with back-end servers that are accessed hierarchically, an overview of a multi-tier computer architecture and one example of a particular multi-tiered system that encounters such problems is described.

### Multi-Tier Application Architecture

In the multi-tier application architecture, a client communicates requests to a server for data, software and services, for example, and the server responds to the requests. The server's response may entail communication with a database management system for the storage and retrieval of data.

The multi-tier architecture includes at least a database tier that includes a database server, an application tier that includes an application server and application logic (i.e., software application programs, functions, etc.), and a client tier. The application server responds to application requests received from the client and forwards data requests to the database server.

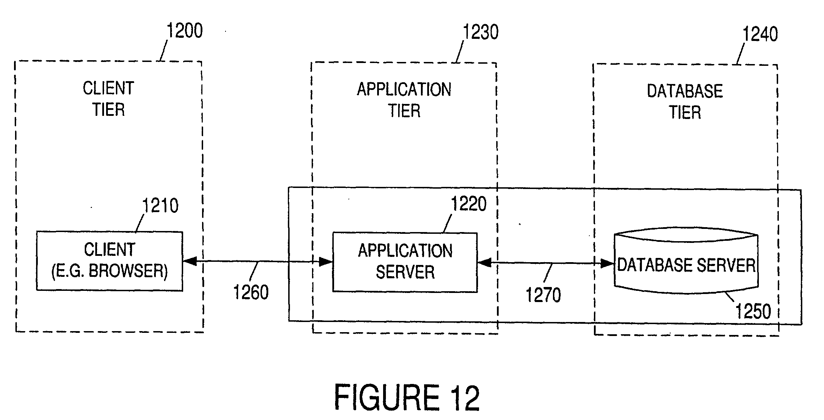

Figure 12 provides an overview of a multi-tier architecture. Client tier 1200 typically consists of a computer system that provides a graphic user interface (GUI) generated by a client 1210, such as a browser or other user interface application. Conventional browsers include Internet Explorer and Netscape Navigator, among others. Client 1210 generates a display from, for example, a specification of GUI elements (e.g., a file containing input, form, and text elements defined using the Hypertext Markup Language (HTML)) and/or from an applet (i.e., a program such as a program written using the Java™ programming language, or other platform independent programming language, that runs when it is loaded by the browser).

Further application functionality is provided by application logic managed by application server 1220 in application tier 1230. The apportionment of application functionality between client tier 1200 and application tier 1230 is dependent upon whether a "thin client" or "thick client" topology is desired. In a thin client topology, the client tier (i.e., the end user's computer) is used primarily to display output and obtain input, while the computing takes place in other tiers. A thick client topology, on the other hand, uses a more conventional general purpose computer having processing, memory, and data storage abilities. Database tier 1240 contains the data that is accessed by the application logic in application tier 1230. Database server 1250 manages the data, its structure and the operations that can be performed on the data and/or its structure.

Application server 1220 can include applications such as a corporation's scheduling, accounting, personnel and payroll applications, for example. Application server 1220 manages requests for the applications that are stored therein. Application server 1220 can also manage the storage and dissemination of production versions of application logic. Database server 1250 manages the database(s) that manage data for applications. Database server 1250 responds to requests to access the scheduling, accounting, personnel and payroll applications' data, for example.

Connection 1260 is used to transmit data between client tier 1200 and application tier 1230, and may also be used to transfer the application logic to client tier 1200. The client tier can communicate with the application tier via, for example, a Remote Method Invocator (RMI) application programming interface (API) available from Sun Microsystems™. The RMI API provides the ability to invoke methods, or software modules, that reside on another computer system. Parameters are packaged and unpackaged for transmittal to and from the client tier. Connection 1270 between application server 1220 and database server 1250 represents the transmission of requests for data and the responses to such requests from applications that reside in application server 1220.

Elements of the client tier, application tier and database tier (e.g., client 1210, application server 1220 and database server 1250) may execute within a single computer. However, in a typical system, elements of the client tier, application tier and database tier may execute within separate computers interconnected over a network such as a LAN (local area network) or WAN (wide area network).

### Enterprise Environments

An enterprise environment is one that uses the multi-tier application architecture. In such an environment, organizations are typically divided into hierarchical units like divisions, geographical domains, departments, etc. Employees belong to a unit which in turn is made up of other units. Typically the relationship between the different units defines how the configured data for each employee is defined. The need for such layering is proven to be essential for most desktop environments like Solaris, Linux, and Windows NT, because it not only organizes the various divisions in an enterprise system, but also allows the employees to access data and system resources depending on their position in the layers.

In an enterprise environment some data may be stored and organized in a Document Object Model (DOM) tree by a Registry server. The registry server is a database server which holds information for a variety of users, including data relating to how they prefer their computing environments to be arranged, for instance, printer types, font types, and desired locations for files.

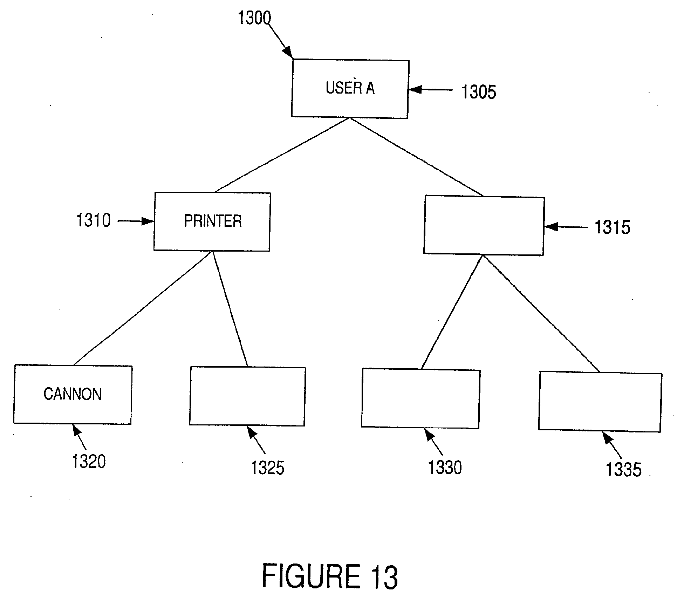

An example of a DOM tree that may reside on a database server is shown in Figure 13. Figure 13 comprises a DOM tree 1300 having nodes 1305, 1310, 1315, 1320, 1325, 1330, and 1335.
This DOM tree represents a user preference on a Registry server where user A has their printer setting at node 1310 to Cannon at node 1320.

### Current Hierarchical Environments

Current hierarchical environments, such as those that use the DOM, suffer various disadvantages. For instance, retrieving data in order to service a client request from the DOM tree is performed inefficiently. In addition, many hierarchical environments do not support polling of open sockets. Also, some environments, Solaris for Java for instance, do not support a blocking time interval with a granularity of less than 20 milliseconds.

In operation, this means that only one open socket (and hence client request) can be serviced at a time by a socket thread and there is a built in time period relating to how long it takes to service an open socket, regardless of how long it actually takes. This may cause problems of backup when trying to maintain a large number of requests by a limited amount of socket threads, specifically when a queue used to order the client requests is limited in size. In addition, using some programming languages may cause extra overhead on the system resources, and efficiency/speed constraints may also be introduced. Thus, in the past, server frameworks to deal with those client requests to a database server have been inefficient.

### SUMMARY OF THE INVENTION

It is an object of the invention to provide a balanced distribution of services to clients.

This object of the invention is solved by a method for a server to handle one or more client requests comprising: obtaining one or more of said client requests for hierarchically organized data at a server; dividing said client requests into one or more smaller units; and servicing said units in order.

Advantageously, the client requests may be in a XML format.

Further, the hierarchically organized data may be stored using a Document Object Model. The server may be a registry server.

The smaller units may be placed in a queue, e.g. facilitating distribution of the requests and the queue may be handled using a FIFO scheduling algorithm. This allows to e.g. handle with preference requests which are in the buffer for a longer period of time.

The units may be defined by an XML <envelope> and an XML </envelope> tag. Thus, e.g. only the envelopes have to be analyzed, to save time.

The object of the invention is further solved by a computer program product comprising: a computer usable medium having computer readable program code embodied therein configured to cause a server to handle one or more client requests comprising: computer readable code configured to cause a computer to obtain one or more of said client requests for hierarchically organized data at a server; computer readable code configured to cause a computer to divide said client requests into one or more smaller units; and computer readable code configured to cause a computer to service said units in order.

The object of the invention is further solved by an apparatus comprising: one or more requests for hierarchically organized data transmitted from a client to a server; a thread pool object configured to divide said requests into one or more smaller units; and one or more worker objects configured to service said units in order.

### BRIEF DESCRIPTION OF THE DRAWINGS

These and other features, aspects and advantages of the present invention will become better understood with regard to the following description, appended claims and accompanying drawings where:
- Fig. 1: is a flowchart of a server framework according to an embodiment of the present invention.
- Fig. 2: is a flowchart showing a server framework according to another embodiment of the present invention.
- Fig. 3: is a flowchart showing a server framework in a platform independent environment according to an embodiment of the present invention.
- Fig. 4: is a flowchart showing how requests are serviced in order according to an embodiment of the present invention.
- Fig. 5: is an illustration of a Registry server handling a client request according to an embodiment of the present invention.
- Fig. 6: is an illustration of the various thread and queue pools according to an embodiment of the present invention.
- Fig. 7: is a flowchart of a socket thread's life cycle after instantiation according to an embodiment of the present invention.
- Fig. 8: is a flowchart of a worker thread's life cycle after instantiation according to another embodiment of the present invention.
- Fig. 9: is an illustration of a worker thread's life cycle according to another embodiment of the present invention.
- Fig. 10: is an illustration of an embodiment of a computer execution environment.
- Fig. 11: is the manner in which one embodiment of the present invention separates client requests into smaller units.
- Fig. 12: is a multi-tier computer architecture.
- Fig. 13: is an example of a DOM tree that resides on a database server.

### DETAILED DESCRIPTION OF THE INVENTION

Embodiments of the invention relate to a server framework for a database server. In the following description, numerous specific details are set forth to provide a more thorough description of embodiments of the invention. It will be apparent, however, to one skilled in the art, that the invention may be practiced without these specific details. In other instances, well known features have not been described in detail so as not to obscure the invention.

Embodiments of the present invention may be used in a framework for a database server, and in particular, where data is accessed hierarchically, for instance using a DOM. In one embodiment of the present invention, one or more clients requests are made to a server for data. The requests are separated into smaller units. Each smaller unit is then serviced in the order it is received. Thus, each client gets a more balanced distribution of services to its requests (i.e., one request is not completely fulfilled while others wait and remain unfulfilled).

In one embodiment, the present invention provides a server framework for servicing client requests coming in eXtensible Markup Language (XML) format using TCP/IP as the communication protocol. This involves creating and maintaining sessions for every client wishing to use the server, which in turn allows each request to reside in its own socket. Then, a thread pool object assigns read request tasks to one or more worker threads. A worker thread is a software module, whose purpose is to service the next available client request by looking for the next available request by scanning all of the sockets.

A worker thread reads (services) a specific amount of data representing one unit in an XML representation called "envelope" from a socket. Each client request is divided into envelopes which are serviced in a pre-determined order, and in this way the thread is not tied up in one socket, and can service another request in another socket. This ensures a fair and balanced servicing of requests coming into the socket pool.

In one embodiment, each envelope is defined by the information between the XML tags <envelope> and </envelope>. In another embodiment, read requests are given to the worker threads using an event queuing model, and a FIFO scheduling algorithm. In other embodiments, other applicable structures are used to schedule the service of the client threads, such as last in, first out (LIFO) or stacks, for instance. These requested transactions are ultimately executed by an XML-DOM/Database module of the server. In another embodiment, session tracking of individual requests that come in is done by assigning a unique session identifier for every new session. This enables the server to send a response back to the correct session based on the value of the identifier.

### Server Framework

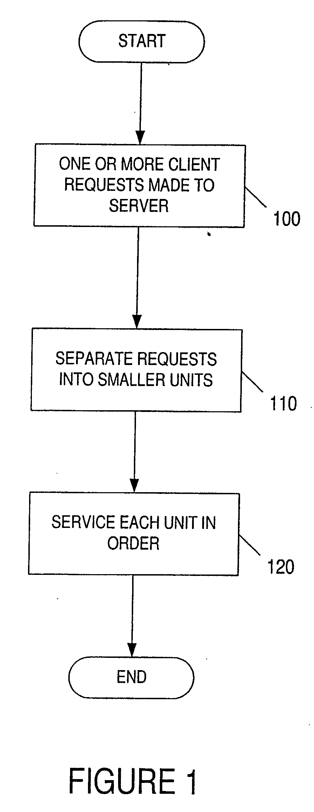

The server framework according to an embodiment of the present invention is shown in Figure 1. At operation 100, one or more client requests are made to a database server, for instance one that stores data using the DOM. At operation 110, the requests are separated into smaller units. The units are divided up so that the work required to service the threads can be divided up. Next, at operation 120, each unit is serviced in order by finding the next appropriate unit to service. The units may represent portions of multiple client requests. To service the units in order, all of the units from the multiple client requests are broken up into one pool having all of the units. Then, each unit is serviced in order (i.e., the unit that has waited the longest is serviced first). By servicing the units in order, the multiple client requests receive a fair share of service, since each request will be serviced in about the same amount of time.

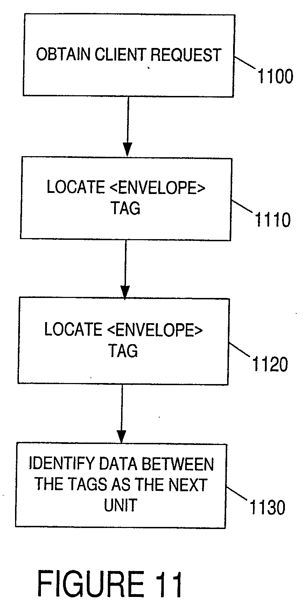

The manner in which one embodiment of the present invention separates client requests into smaller units is shown in Figure 11. At operation 1100, a request is obtained. In this embodiment of the present invention requests are in an XML format. XML documents are built by enclosing data within tags. The tags include an opening tag and a closing tag. The tags tell other users what type of data is enclosed between the opening and closing tags. Typically the XML document is constructed by a user of a client computer who generates an XML document having various different tags and data.

According to this embodiment of the present invention the corresponding tags <envelope> and </envelope> are used to indicate that any information between the tags represents the separated unit to service . Thus, at operation 1110, the next XML <envelope> tag is obtained. Then, the next </envelope> tag is obtained at operation 1120. Thereafter, the data between the two tags is identified as the unit for service at operation 1130.

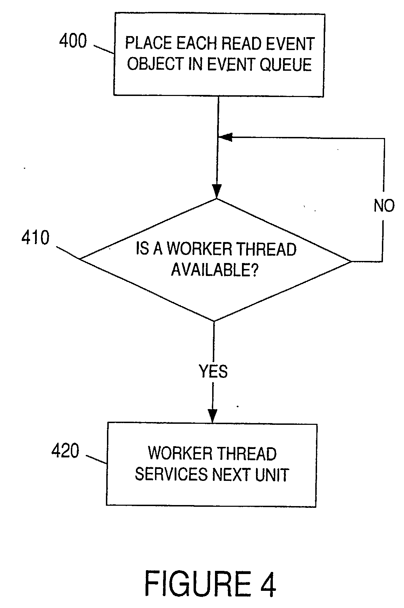

The manner in which one embodiment of the present invention services the units in order is shown in Figure 4, which describes operation 120 in Figure 1 in more detail. At operation 400, a read event object is placed in an event queue. The read event object indicates the next socket to be read. Next, at operation 410, it is determined if a worker thread is available. The worker thread's purpose is to service envelopes. If one is not available, the process repeats until one is. Otherwise, at operation 420, a worker thread fulfills the request, for instance by reading the next available unit of the next available thread as instructed by a FIFO or other suitable scheduling algorithm.

### Scheduling Algorithms

Tasks assigned to worker threads in the pool should be optimized. In other words, the worker threads have to be scheduled in such a way that a uniform distribution of tasks takes place. This problem is solved in one embodiment by using a FIFO or other suitable scheduling algorithm. For instance, FIFO uses the principle that the thread in the pool that has been idle for the longest time gets the next available task in the event queue to execute. This ensures fairness in the distribution of task load to all threads in the pool.

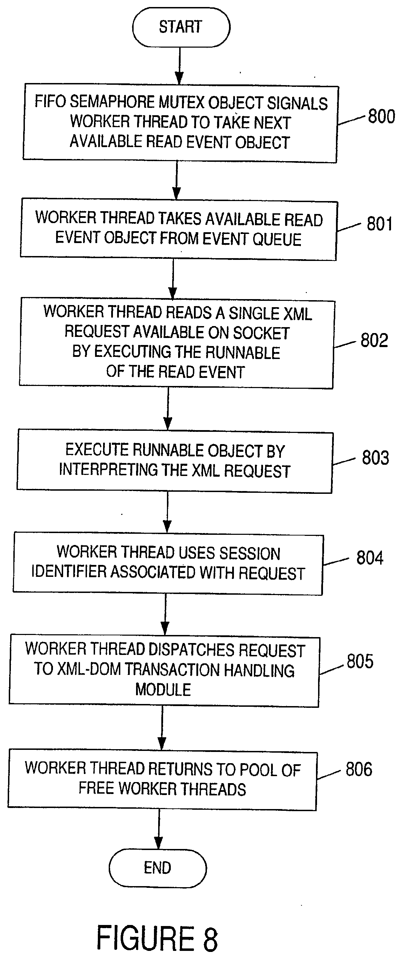

A Runnable object (in this case it is the read event object) is put in an event queue using the FIFO scheduling algorithm. The read event object refers to the appropriate envelope that should be serviced. The worker thread's life cycle after instantiation according to one embodiment of the present invention is shown in Figure 8, where:
Operation 1: Take the next available read event object from the event queue (operation 801) as soon as the FIFO algorithm indicates that it is proper to do so, which is seen at operation 800.
Operation 2: Execute the Runnable object thus created by interpreting the XML request (operation 803). This involves executing the Runnable of the read event object, which is seen at operation 802.
Operation 3: Use a session identifier associated with the request, which is seen at operation 804. This session identifier is used to determine the socket that should be written to while sending the response, and is created when the session is opened.
Operation 4: The transaction requested is dispatched to the XML-DOM transaction handling module by a separate worker thread, which is seen at operation 805.
Operation 5: The worker thread returns itself to the free list of worker threads in the worker thread pool object awaiting another task, which is seen at operation 806.

### Platform Independent Environment

One embodiment of the present invention takes place in a platform independent environment, for instance one that uses enterprise Java as the development platform. One embodiment of an architecture that is suitable for use with the present invention is one where the server uses XML as the application level protocol, and TCP/IP as the communications level protocol. At any given time there can be several users who have established a session with the Registry server, but each session is unique to its user. All requests sent to the server, as well as responses back from the server are in XML, which are interpreted by the server using a Java parser such as JAXP. Since there are multiple requests to the server from various users, tracking of every request that comes to the server is done by assigning a unique session identifier. This way the server is able to send the response back to the correct session.

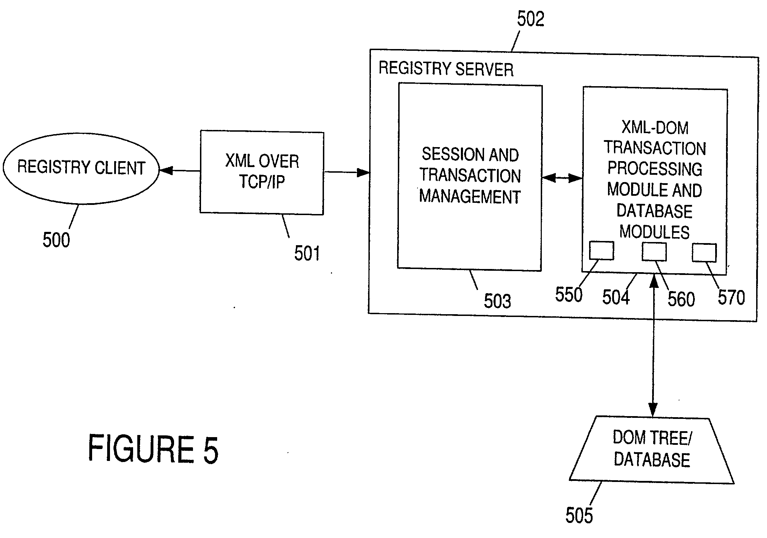

The request itself is executed by the DOM/ Database modules 504 of the server, and is shown in Figure 5. Here, client 500 using XML as the application level protocol, and TCP/IP as the communications level protocol (501) communicates with Registry server 502. The server is made up of two components which have a bi-directional communication path between them. Session and transaction management 503 passes the requests to the DOM/Database modules 504 by examining the next entry in the event queue 550 which is populated by thread pool object 560. The next entry in the queue is obtained by the next available worker thread 570 which retrieves the requests from the DOM tree or Database 505.

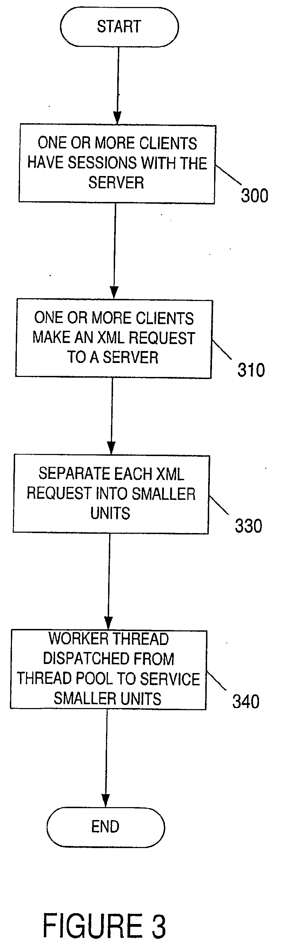

In operation, an embodiment of the present invention that is used with such an architecture is shown in Figure 3. At operation 300, one or more clients have sessions established between themselves and the server. At operation 310, one or more of the clients make an XML request to the server. Then, at operation 330, each XML request is separated into basic XML units called envelopes. Then, one or more worker thread objects are dispatched from a thread pool object to handle each envelope in order at operation 340 by accessing the DOM database.

### Multi Threaded Model For Session Management

The communication path for a user is accomplished via an open TCP/IP socket descriptor which is dedicated to the user for the duration of the connection. The connection is terminated when the user issues a special call to end the communication path. Every TCP/IP socket opened for a client is put in to a list of currently open connections called a socket pool. Since Java does not have any system calls in the programming language to poll open socket descriptors (like C), polling of the sockets from this pool is performed by threads (called socket threads). These threads, which are created by an administrator at server startup, perform similar tasks as the threads of an operating system (kernel threads).

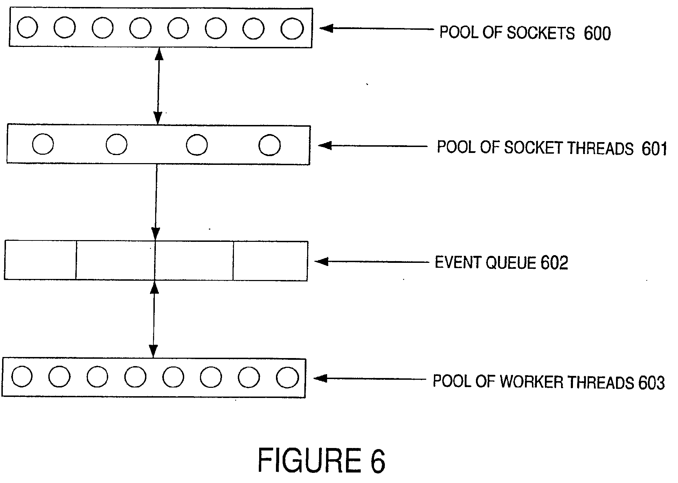

Figure 6 shows an illustration of the various pools, where 600 is a pool of sockets. A pool of socket threads 601 monitor the open sockets for data. If data is to be read, it puts a read event for that socket in the transaction managers event queue (event queue is part of the thread pool object used in the transaction manager module 503, and is 602 in Figure 6). This means that if there are "N" threads and "M" open sockets, then each socket thread would monitor "M/N" open socket connections, implying that the task of monitoring is evenly distributed among the socket threads.

One advantage of having multiple socket threads pooling and concurrently processing client requests is that response time for the client is greatly improved. For example, if it takes time "a" to poll a socket pool using just one thread, it would take time a/n to poll the same pool using "n" threads. Hence response time of the server improves proportional to "n". Appendix A shows the pseudo code for an operational socket thread used in an embodiment of the present invention. After dropping the event in an event queue 602, the socket thread continues its pooling task. Worker threads in a worker thread pool 603 wait for an event to show up in event queue 602 and based on a FIFO or other suitable scheme, executes the event.

### Event Based Model For Implementing Thread Pools

Even though a thread pool model limits the number of threads created for the server's process space, a configurable number of threads help in improving the performance scalability as well as maintaining an optimal load on the system. The pool is instantiated at startup and performs tasks specified by the Runnable object (in our case it is the read event object) that is put in the thread pools event queue by a session manager as described in the previous section.

One problem with the thread pool is that normally the amount of data (in bytes) that a worker thread must read before dropping the data (event) in an event queue should be known in advance so that the worker thread can know when to stop processing. However, since the application level protocol of one embodiment of the present invention is implemented in XML, this problem is successfully solved using a schema that has a predetermined format for each request with clear start and stop points. This schema assigns what is called an envelope for each request, with each envelope being a different size in bytes. Since each envelope has a beginning and ending tag, which is easily recognizable by the worker thread, the worker thread knows the beginning and end of each request and knows when to stop.

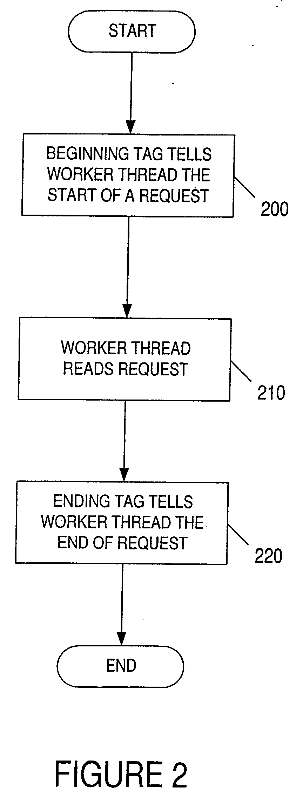

This is seen in Figure 2. At operation 200, the beginning tag of the envelope tells the worker thread the start of a new request. The worker thread reads the request at operation 210 until it encounters the ending tag at operation 220. The ending tag signals the worker thread the end of a request. One way this schema may be used is to read only one envelope per socket, even though there may be more envelopes (requests) waiting.

Since a fair and unbiased polling of the thread pool is adopted in one or more embodiments of the present invention, no socket engages a worker thread for too long. This is particularly useful when a thread reading a socket gets stalled after a certain length of time because the server fails. By reading just one envelope at a time before moving on, if there are other envelopes in the queue there is a possibility that different (and maybe more) envelopes may be read before the server fails, since multiple resources have been assigned to service the envelopes (as opposed to a single resource).

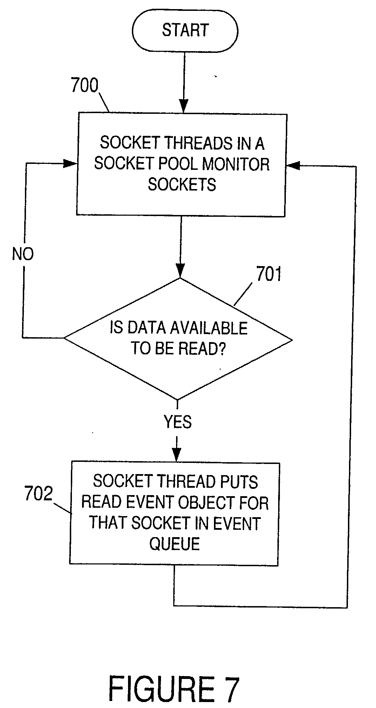

The socket thread's life cycle after instantiation according to one embodiment of the present invention is shown in Figure 7, where at operation 700 socket threads in a socket thread pool monitor open sockets for data. This corresponds to the pseudo-code listed in appendix A where all sockets are checked to see if data is ready to be read in. Thus, at operation 701, if data comes in a open socket, it is picked up by a socket thread. Otherwise, the socket thread continues to monitor the pool of open sockets for data. The socket thread puts a read event object for the open socket that has data in an event queue at operation 702, and goes back to monitoring the open sockets for additional data.

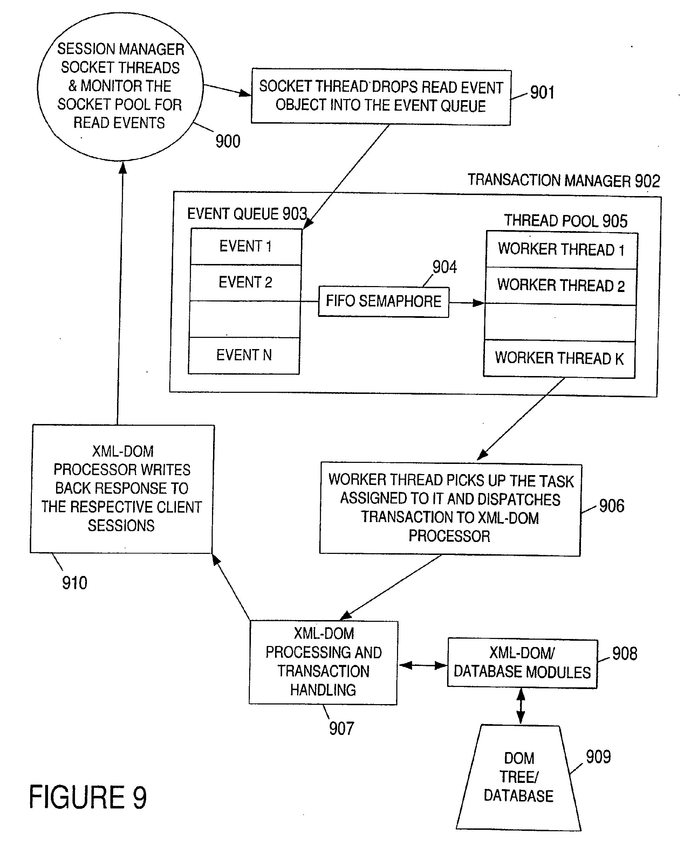

The process is once again illustrated in Figure 9, where at operation 900 a session manager has socket threads monitor the socket pool for read events. As soon as there is one (read event), it is dropped at operation 901 into an event queue 903 which is part of transaction manager 902. Event queue may have several events lined up ready to be executed by one of the several worker threads in thread pool 905. Using the FIFO or other suitable scheme 904, a worker thread is assigned the next available event from the event queue. The worker thread reads the event object (in our case it is the read event object) placed in the event queue by the socket thread. It then reads the XML request associated with the read event object, and interprets the XML request. The worker thread then, at operation 906, dispatches the request (transaction) to XML-DOM processor 907, which transmits the transaction using the XML-DOM/Database modules 908 to get the requested information from the DOM tree/Database 909. The XML-DOM processor writes the response back (910) to the correct client session using a unique sessions identifier.

### Embodiment of Computer Execution Environment (Hardware)

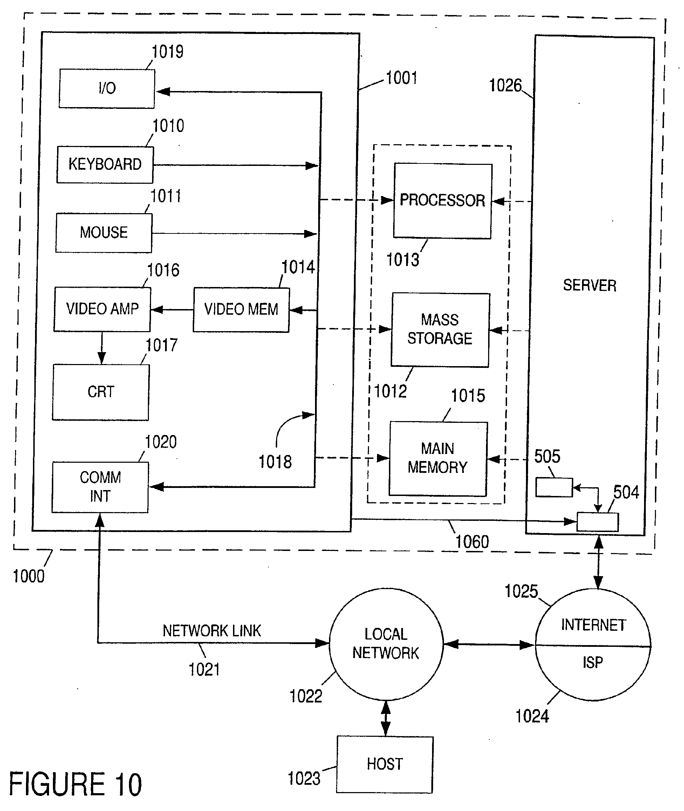

An embodiment of the invention can be implemented as computer software in the form of computer readable program code executed in a general purpose computing environment such as environment 1000 illustrated in Figure 10, or in the form of bytecode class files executable within a Java™ run time environment running in such an environment, or in the form of bytecodes running on a processor (or devices enabled to process bytecodes) existing in a distributed environment (e.g., one or more processors on a network). A keyboard 1010 and mouse 1011 are coupled to a system bus 1018. The keyboard and mouse are for introducing user input to the computer system and communicating that user input to central processing unit (CPU) 1013. Other suitable input devices may be used in addition to, or in place of, the mouse 1011 and keyboard 1010. I/O (input/output) unit 1019 coupled to bi-directional system bus 1018 represents such I/O elements as a printer, A/V (audio/video) I/O, etc.

Computer 1001 may include a communication interface 1020 coupled to bus 1018. Communication interface 1020 provides a two-way data communication coupling via a network link 1021 to a local network 1022. For example, if communication interface 1020 is an integrated services digital network (ISDN) card or a modem, communication interface 1020 provides a data communication connection to the corresponding type of telephone line, which comprises part of network link 1021. If communication interface 1020 is a local area network (LAN) card, communication interface 1020 provides a data communication connection via network link 1021 to a compatible LAN. Wireless links are also possible. In any such implementation, communication interface 1020 sends and receives electrical, electromagnetic or optical signals which carry digital data streams representing various types of information.

Network link 1021 typically provides data communication through one or more networks to other data devices. For example, network link 1021 may provide a connection through local network 1022 to local server computer 1023 or to data equipment operated by ISP 1024. ISP 1024 in turn provides data communication services through the world wide packet data communication network now commonly referred to as the "Internet" 1025. Local network 1022 and Internet 1025 both use electrical, electromagnetic or optical signals which carry digital data streams. The signals through the various networks and the signals on network link 1021 and through communication interface 1020, which carry the digital data to and from computer 1000, are exemplary forms of carrier waves transporting the information.

Processor 1013 may reside wholly on client computer 1001 or wholly on server 1026 or processor 1013 may have its computational power distributed between computer 1001 and server 1026. Server 1026 symbolically is represented in Figure 10 as one unit, but server 1026 can also be distributed between multiple "tiers". In one embodiment, server 1026 comprises a middle and back tier where application logic executes in the middle tier and persistent data is obtained in the back tier.

With reference to embodiments of the present invention, hierarchically organized information in a database 505 typically resides in the back tier while client requests typically are invoked on client computer 1001. In operation, client computer 1001 makes a request 1060, for instance using XML, for the hierarchically organized information in the database 505. The request 1060 is transmitted to a transaction processing module 1070, where multiple requests may be divided into smaller pieces and handled by the transaction processing module 1070 by accessing the hierarchical information 1050.

Computer 1001 includes a video memory 1014, main memory 1015 and mass storage 1012, all coupled to bi-directional system bus 1018 along with keyboard 1010, mouse 1011 and processor 1013. As with processor 1013, in various computing environments, main memory 1015 and mass storage 1012, can reside wholly on server 1026 or computer 1001, or they may be distributed between the two. Examples of systems where processor 1013, main memory 1015, and mass storage 1012 are distributed between computer 1001 and server 1026 include the thin-client computing architecture developed by Sun Microsystems, Inc., the palm pilot computing device and other personal digital assistants, Internet ready cellular phones and other Internet computing devices, and in platform independent computing environments, such as those which utilize the Java technologies also developed by Sun Microsystems, Inc.

The mass storage 1012 may include both fixed and removable media, such as magnetic, optical or magnetic optical storage systems or any other available mass storage technology. Bus 1018 may contain, for example, thirty-two address lines for addressing video memory 1014 or main memory 1015. The system bus 1018 also includes, for example, a 32-bit data bus for transferring data between and among the components, such as processor 1013, main memory 1015, video memory 1014 and mass storage 1012. Alternatively, multiplex data/address lines may be used instead of separate data and address lines.

In one embodiment of the invention, the processor 1013 is a microprocessor manufactured by Motorola, such as the 680X0 processor or a microprocessor manufactured by Intel, such as the 80X86, or Pentium processor, or a SPARC microprocessor from Sun Microsystems, Inc. However, any other suitable microprocessor or microcomputer may be utilized. Main memory 1015 is comprised of dynamic random access memory (DRAM).
Video memory 1014 is a dual-ported video random access memory. One port of the video memory 1014 is coupled to video amplifier 1016. The video amplifier 1016 is used to drive the cathode ray tube (CRT) raster monitor 1017. Video amplifier 1016 is well known in the art and may be implemented by any suitable apparatus. This circuitry converts pixel data stored in video memory 1014 to a raster signal suitable for use by monitor 1017. Monitor 1017 is a type of monitor suitable for displaying graphic images.

Computer 1001 can send messages and receive data, including program code, through the network(s), network link 1021, and communication interface 1020. In the Internet example, remote server computer 1026 might transmit a requested code for an application program through Internet 1025, ISP 1024, local network 1022 and communication interface 1020. The received code may be executed by processor 1013 as it is received, and/or stored in mass storage 1012, or other non-volatile storage for later execution. In this manner, computer 1000 may obtain application code in the form of a carrier wave. Alternatively, remote server computer 1026 may execute applications using processor 1013, and utilize mass storage 1012, and/or video memory 1015. The results of the execution at server 1026 are then transmitted through Internet 1025, ISP 1024, local network 1022 and communication interface 1020. In this example, computer 1001 performs only input and output functions.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.

The computer systems described above are for purposes of example only. An embodiment of the invention may be implemented in any type of computer system or programming or processing environment.

In the following a further embodiment of the invention will be described.

In this embodiment it is assumed that client user sessions have been created and maintained for each one of a plurality of clients that wish to obtain services from a remote unit or a group of units. As outlined above, the session handling should be done in such a way that requests are serviced fairly balanced for all the clients, i.e., each client should receive a fair share of the available resources.

In the present embodiment it is further assumed that a scalable server framework is arranged for providing the services to the clients. Further, the client requests are assumed to be in a XML-format and are assumed to be transmitted using TCP/IP as a communication protocol. However, it is noted that any other format and/or communication protocol may be used.

According to the present embodiment sessions are created and maintained for every single client wishing to use the server or server frame. The sessions are assigned to specific sockets at the server framework. In order to fairly treat all sessions, i.e. requests coming in from the particular clients, a thread pool object is located at the server framework, which is arranged to manage the processing of the requests from the clients. The thread pool object assigns read request tasks to worker threads, which in turn pick up the request from the next available socket with data to be read, e.g. the sockets may be interrogated in a sequential manner or similar.

In order to reduce the time a worker thread spends at a particular socket, not all of the available data at a socket is read. Instead, the XML representation of the data is used to take one specific unit of a series of requests coming in to a socket at any time. As in the present embodiment each request includes a XML-envelope, the worker thread is only required to read and service one envelop at a time. Thus, the worker thread does not spend to much time at a particular socket and can instead read requests from further sockets. Thus, the worker thread works through one request at time at a particular socket before proceeding to a sub-sequence socket. Thus, each socket, i.e. client or session, receives its share of the resources at the server framework.

As outlined above, the read requests are given to the worker threads, which pick up requests from the sockets. In order to distribute the read requests to a plurality of worker threads, the read requests are distributed in an event queuing model including read events corresponding to read requests. The sockets, upon occurrence of a read request, plays corresponding read events into the thread pools event queue. The thread pool object then reads the read events from the event queue and coordinates the assignment of the read request tasks to the worker threads. The assignment of the read request tasks to the worker threads may depend on the number of the worker threads that are available at a particular point in time and on the number of tasks that are currently waiting in the thread pool object event queue.

The thread pool object event queue may have a first-in first-out semaphore model wherein the thread that has been waiting for a maximum period of time is given a maximum priority for being picked up by a worker thread. However, any other kind of buffer structure may be used instead, e.g. a buffer structure where a waited priority is given to the request, depending on, e.g., a content of the request, a source of the request and similar.

The number of worker thread objects may be configured, in order to optimize a server performance based on the number of processors available in an architecture being used. Thus, it is possible to achieve a near linear scalability with the number of processors available in the server framework.

Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

According to another embodiment of the invention, a server framework may be provided with the following elements.
1) A server framework comprising:
   one or more client requests for hierarchically organized data from a server;
   a thread pool object configured to divide said requests into one or more smaller units; and
   one or more worker objects configured to service said units in order.
2). The server framework of 1) wherein said client requests are in XML format.
3). The server framework of 1) wherein said hierarchically organized data is stored using a Document Object Model.
4) The server framework of 1) wherein said smaller units are placed in a queue.
5) The server framework of 1) wherein said server is a registry server.
6) The server framework of 4) wherein said queue is handled using a FIFO scheduling algorithm.
7) The server framework of 1) wherein said units are defined by an XML <envelope> and an XML </envelope> tag.

According to another embodiment, a system may be provided for implementing the server framework of 1) - 7).

Thus, a framework for a server where data is accessed hierarchically is described in conjunction with one or more specific embodiments. The invention is defined by the following claims and their full scope of equivalents.

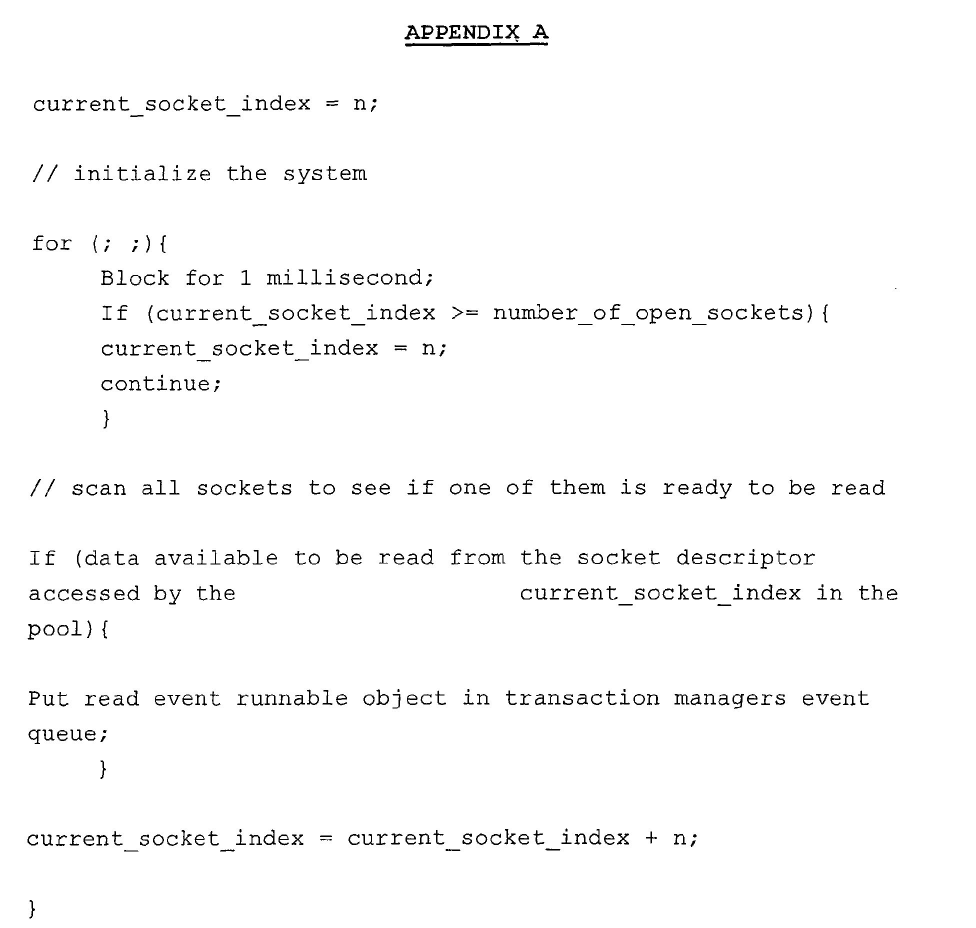

## Claims

1. A method for a server to handle one or more client requests comprising:
obtaining one or more of said client requests for hierarchically organized data at a server;
dividing said client requests into one or more smaller units; and
servicing said units in order.

2. The method of claim 1 wherein said client requests are in XML format.

3. The method of at least one of the claims 1 and 2 wherein said hierarchically organized data is stored using a Document Object Model.

4. The method of at least one of the claims 1 to 3 wherein said smaller units are placed in a queue.

5. The method of at least one of the claims 1 to 4 wherein said server is a registry server.

6. The method of claim 4 wherein said queue is handled using a FIFO scheduling algorithm.

7. The method of at least one of the claims 1 to 6 wherein said units are defined by an XML <envelope> and an XML </envelope> tag.

8. A computer program product comprising:
a computer usable medium having computer readable program code embodied therein configured to cause a server to handle one or more client requests comprising:
computer readable code configured to cause a computer to obtain one or more of said client requests for hierarchically organized data at a server;
computer readable code configured to cause a computer to divide said client requests into one or more smaller units; and
computer readable code configured to cause a computer to service said units in order.

9. The computer program product of claim 8 wherein said client requests are in XML format.

10. The computer program product of at least one of the claims 8 and 9 wherein said hierarchically organized data is stored using a Document Object Model.

11. The computer program product of at least one of the claims 8 to 10 wherein said smaller units are placed in a queue.

12. The computer program product of at least one of the claims 8 to 11 wherein said server is a registry server.

13. The computer program product of claim 11 wherein said queue is handled using a FIFO scheduling algorithm.

14. The computer program product of at least one of the claims 8 to 13 wherein said units are defined by an XML <envelope> and an XML </envelope> tag.

15. A program having instructions adapted to make a computer carry out the method of at least one of the claims 1 - 7.

16. A computer readable medium, in which a program is embodied, where the program is to make a computer execute the method of at least one of the claims 1 - 7.

17. An apparatus comprising:
one or more requests for hierarchically organized data transmitted from a client to a server;
a thread pool object configured to divide said requests into one or more smaller units; and
one or more worker objects configured to service said units in order.

18. The apparatus of claim 17 wherein said requests are in XML format.

19. The apparatus of at least one of the claims 17 and 16 wherein said hierarchically organized data is stored using a Document Object Model.

20. The apparatus of at least one of the claims 17 to 19 wherein said smaller units are placed in a queue.

21. The apparatus of at least one of the claims 17 to 20 wherein said server is a registry server.

22. The apparatus of claim 18 wherein said queue is handled using a FIFO scheduling algorithm.

23. The apparatus of at least one of the claims 17 to 22 wherein said units are defined by an XML <envelope> and an XML </envelope> tag.
